# EUROPEAN PATENT SPECIFICATION

(11) **EP 2 320 682 B1**
(45) Date of publication and mention of the grant of the patent: **06.08.2014**
(21) Application number: 10251805.7
(22) Date of filing: 15.10.2010
(51) Int. Cl.: H04R 25/00, H04R 1/10

(54) **Method and apparatus for in-the-ear hearing aid with capacitive sensor**
Verfahren und Vorrichtung für In-dem-Ohr Hörhilfe mit kapazitivem Sensor
Procédé et appareil d'aide auditive intra-auriculaire doté d'un capteur capacitif

(30) Priority: 16.10.2009 US 252636 P; 20.10.2009 US 253372 P
(43) Date of publication of application: 11.05.2011
(73) Proprietor: Starkey Laboratories, Inc., Eden Prairie, MN 55344 (US)
(72) Inventor: Sacha, Michael Karl, Chanhassen, Minnesota 55317 (US); Jacoby, Robert P., Plymouth, Minnesota 55442 (US)
(74) Representative: Maury, Richard Philip

(56) References cited:
- EP-A1- 2 061 276
- EP-A2- 1 496 530
- WO-A1-2009/118221
- DE-A1- 10 136 033
- DE-B3-102004 019 353
- ZACK ALBUS: 'PCB-Based Capacitive Touch Sensing With MSP430', [Online] no. SLAA363A, pages 1 - 25, XP002566917 TEXAS INSTRUMENTS APPLICATION REPORT Retrieved from the Internet: <URL:http://focus.ti.com/lit/slaa363a/slaa3 63a.pdf> [retrieved on 2010-02-04]

## Description

The present subject matter relates generally to hearing aids, and in particular to an in-the-ear hearing aid with capacitive sensor.

### BACKGROUND

The smaller a hearing aid becomes, the more difficult it can be to put in the ear, takeout of the ear, and to operate. Even simple switching of the device becomes more difficult as the device becomes smaller. The control on an in-the-ear (ITE) hearing aid can be difficult to access and to operate. Manual operation of such controls can cause further discomfort if the device is pressed further into the wearer's ear.

Thus, there is a need in the art for a system for improved controls for hearing aids. There is a need in the art for improved controls for in-the-ear hearing aids.

DE102004019353 proposes a hearing aid having a microphone behind a small hole in the casing, adjacent to a push button switch and a proximity sensor based on IR, ultrasonic, inductive or capacitive sensing connected to an evaluation circuit.

### SUMMARY

According to a first aspect of the present invention, there is provided an apparatus as set out in claim 1. According to a second aspect of the present invention, there is provided a method as set out in claim 11. In various embodiments, the present subject matter provides apparatus for a wearer having an ear canal, including: an in-the-ear housing adapted to fit in the wearer's ear canal, the housing having an outer surface; hearing assistance electronics disposed within the housing; capacitive sensing electronics connected to the hearing assistance electronics; and a first capacitive sensor including a first sensing electrode positioned on or near the outer surface of the housing, the sensing electrode connected to the capacitive sensing electronics, wherein the capacitive sensing electronics is adapted to measure a change in capacitance associated with a motion of a finger or hand proximal to the first sensing electrode and to provide a signal to the hearing assistance electronics, the hearing assistance electronics configured to perform at least one operation based on the signal. In various embodiments, the apparatus is programmable to control a plurality of different operations. In various embodiments, the apparatus includes hearing assistance electronics adapted to receive signals from the first capacitive sensor to perform volume control. In various embodiments, the first capacitive sensor is adapted to switch memories of the apparatus. In various embodiments, the apparatus includes a second capacitive sensor adapted to be used in conjunction with the first capacitive sensor to operate the apparatus. In various embodiments, certain designs include a battery door. In some of those designs the first sensing electrode is embedded in the battery door. In various embodiments, the apparatus includes capacitive sensing electronics adapted to measure a change in capacitance associated with one or more taps or tap patterns. In various embodiments, the capacitive sensing electronics are adapted to measure a change in capacitance associated with a sweep of a finger. In various embodiments, the capacitive sensing electronics are adapted to measure a change in capacitance associated with speed or direction of the sweep.

In various embodiments, the present subject matter provides a method for operating an in-the-ear hearing aid, including: measuring a change in capacitance associated with a motion proximal a first sensing electrode of a first capacitive sensor, the first sensing electrode positioned on or near an outer surface of a housing of the hearing aid; and controlling at least one operation of the hearing aid based on the measured change in the capacitance. In various embodiments, the method includes using a second capacitive sensor in conjunction with the first capacitive sensor to operate the hearing aid. In various embodiments, the method includes measuring a change in the capacitance associated with one or more taps or tap patterns. In various embodiments, the method includes measuring a change in the capacitance associated with a sweep of a finger. In various embodiments, the method includes measuring a change in the capacitance associated with speed or direction of the sweep.

This Summary is an overview of some of the teachings of the present application and not intended to be an exclusive or exhaustive treatment of the present subject matter. Further details about the present subject matter are found in the detailed description and appended claims. The scope of the present invention is defined by the appended claims.

### BRIEF DESCRIPTION OF THE DRAWING

FIG. 1 demonstrates on example of an in-the-ear (ITE) hearing aid having two capacitive sensors according to one embodiment of the present subject matter.
FIG. 2 shows a diagram showing various equivalent capacitances for an ITE hearing aid with a capacitive sensors in or about the battery door.
FIGS. 3A and 3B show equivalent circuit models for an ITE hearing aid with a capacitive sensor.
FIG. 4A shows a top view of a sensor contact around the battery door, according to one embodiment of the present subject matter.
FIG. 4B shows a side view of a sensor contact around the battery door which conforms to a curvature of the door, according to one embodiment of the present subject matter.
FIG. 5 shows an example of two sensors about the battery door, according to one embodiment of the present subject matter.
FIG. 6 shows one example of a sensor used with a withdrawal element of a completely-in-the-canal device, according to one embodiment of the present subject matter.
FIG. 7 shows one example of a sensor electrode located in or on the battery door, according to one embodiment of the present subject matter.
FIG. 8 shows one example of a sensor electrode located in the battery door with an air gap, according to one embodiment of the present subject matter.
FIGS. 9A and 9B show various examples of battery door electrode designs according to various embodiments of the present subject matter.
FIG. 10 shows the sensor electrode with tab connected to the battery door with shading to show the plastic encasing the electrode according to one embodiment of the present subject matter.
FIG. 11 shows the embodiment of FIG. 10 with the tab broken off.
FIG. 12 is a perspective drawing of the battery door with a conductive hinge, according to one embodiment of the present subject matter.
FIGS. 13A and B show one embodiment of an ITE hearing aid with a sensor in the canal region, according to one embodiment of the present subject matter.
FIG. 14A shows one block diagram of the sensor electronics according to one embodiment of the present subject matter.
FIGS. 14B and 14C show variations of the sensor electronics according to various embodiments of the present subject matter.
FIGS. 15 and 16 show the effect of different ground traces on the sensitive zone of an in-the-ear hearing aid with capacitive sensing according to claim 1.

### DETAILED DESCRIPTION

The following detailed description of the present subject matter refers to subject matter in the accompanying drawings which show, by way of illustration, specific aspects and embodiments in which the present subject matter may be practiced. These embodiments are described in sufficient detail to enable those skilled in the art to practice the present subject matter. References to "an", "one", or "various" embodiments in this disclosure are not necessarily to the same embodiment, and such references contemplate more than one embodiment. The following detailed description is demonstrative and not to be taken in a limiting sense. The scope of the present subject matter is defined by the appended claims.

The present subject matter of the invention relates generally to method and apparatus for an in-the-ear hearing aid with a capacitive sensor. The disclosures of U.S. Provisional Patent Application Ser. No. 60/940,041 filed May 24. 2007 and U.S. Patent Application Ser. No. 12/126,779 filed May 23, 2008, are relevant.

The present subject matter includes various approaches to improved control of an in-the-ear (ITE) hearing aid. In various embodiments, the present subject matter provides different ways to implement sensors with an ITE hearing aid. In various embodiments, the present subject matter includes various capacitive sensors that can be used with a hearing aid. In various embodiments, the capacitive sensor serves as a capacitive switch. In various embodiments, the present subject matter includes a plurality of switches that can be used together to support or perform a function. In some embodiments, one or more such switches are capacitive switches.

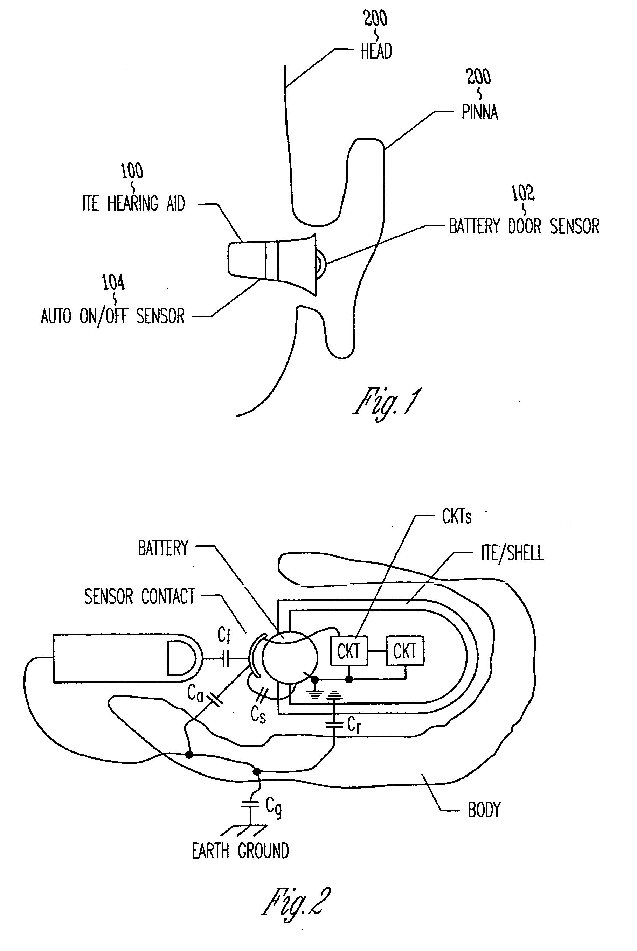

FIG. 1 demonstrates on example of an in-the-ear (ITE) hearing aid having two capacitive sensors according to one embodiment, of the present subject matter. In various embodiments, a first sensor 102 is accessible by the wearer while device 100 is worn and a second sensor 104 detects when the device 100 is in place in the ear canal. In various embodiments, the first sensor is a capacitive switch. In one embodiment, the first sensor 102 is situated in the battery door of the device 100. In one embodiment, the first sensor 102 is adjacent to the battery door. In various embodiments, the first sensor 102 functions as a volume control. In various embodiments, the first sensor 102 functions as a memory switch. In various embodiments, the first sensor 102 has multiple functions. In various embodiments, the first sensor 102 functions as a volume switch and as a memory switch. Other functions and combinations can be supported without departing from the scope of the present subject matter.

In various embodiments, the second sensor 104 is positioned to be in the canal region when the device 100 is placed in the ear canal and worn. The second sensor 104 may be located in the Tragal canal region. In various embodiments, the second sensor 104 functions as an auto on/off sensor. In various embodiments, the first sensor 102 and second sensor 104 outputs are used in conjunction to operate the device 100. For instance, in various embodiments, the first sensor 102 control options may be one set when the second sensor 104 indicates that the device 100 is not being worn, and a second set when the second sensor 104 indicates that the device 100 is being worn. This can serve to conserve inadvertent changes to settings of the device 100 and can result in the conservation of power consumed by the device. In various embodiments, the second sensor 104 can serve to deactivate the device 100 when not worn. In various embodiments, the second sensor 104 can deactivate the first sensor 102 when device 100 is not worn. The operation of device 100 with respect to sensors 102 and 104 is programmable using software or firmware executing on the processor, such as a digital signal processor, of device 100. In the case where device 100 is a hearing aid, the device's digital signal processor is programmed to receive the outputs of sensors 102 and 104 to perform such operations and any special operations to support ITE hearing aid functions. Thus a number of programming options are possible with the present subject matter and the examples given herein are demonstrative and not intended in an exhaustive or exclusive sense.

In various embodiments, the first sensor 102 located at or near the battery door is configured to respond to tap sequences such that one or more functions could be performed with one sensor. In various embodiments, the sensor is a switch. For example, one tap could be interpreted as a function "up" condition while two quick taps could be interpreted as a function "down". "Push and hold" could be interpreted as additional hearing aid functions. It is understood that a variety of movement combinations can be used to control the device 100 and that the ones presented are intended to demonstrate some possible movement operations.

FIG. 2 shows a diagram showing various equivalent capacitances for an ITE hearing aid with a capacitive sensor in or about the battery door. A capacitance between ground and the body of the wearer is modeled as capacitance Cg (for "earth ground capacitance"). A capacitance between the body and the ITE device ground is modeled as Cr (for "return capacitance"). A capacitance of the sensor contact to the finger is Cf (for "finger capacitance"), and from the sensor to the battery of the ITE device is Cs (for "shunt capacitance"). The capacitance between the sensor contact and the body of the wearer is Ca (for "anatomy capacitance").

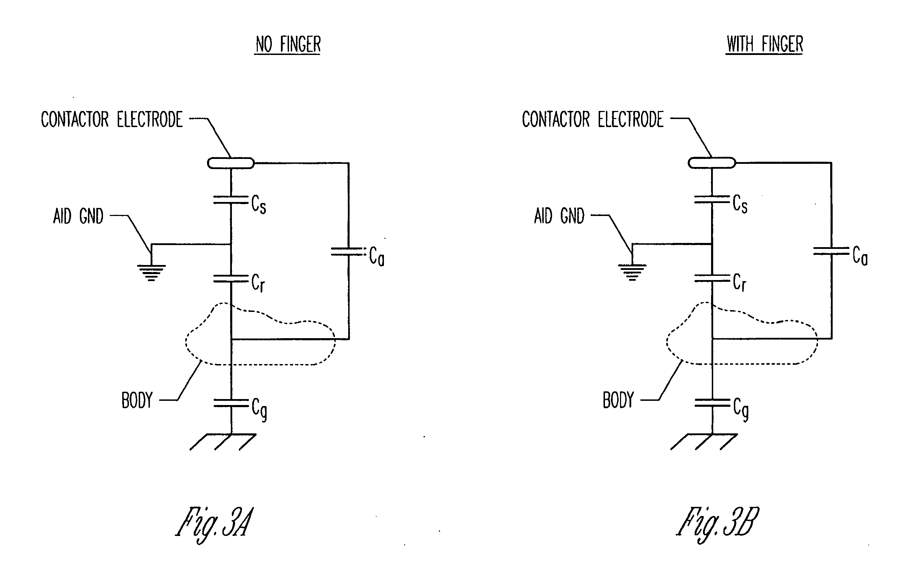

FIGS. 3A and 3B show equivalent circuit models for an ITE hearing aid with a capacitive sensor. FIG. 3A shows the model without a finger and FIG. 3B shows the model with a finger in proximity to the sensor. As the wearer's finger comes into proximity of the contact or electrode, the capacitance between the finger and the contact, Cf, is effectively parallel with the anatomy capacitance, Ca. The change in capacitance by the adding of Cf to Ca (ΔC) is sensed by the device's electronics to determine that the wearer's finger is in proximity to the sensor. If Cr (the "return" capacitance) becomes exceedingly small, there may not be enough change in capacitance (ΔC) to register switch activation. Thus, switch sensitivity is at least partially governed by this capacitance. This can be avoided by selecting appropriate capacitor sensing technology, mechanical design, and device setup.

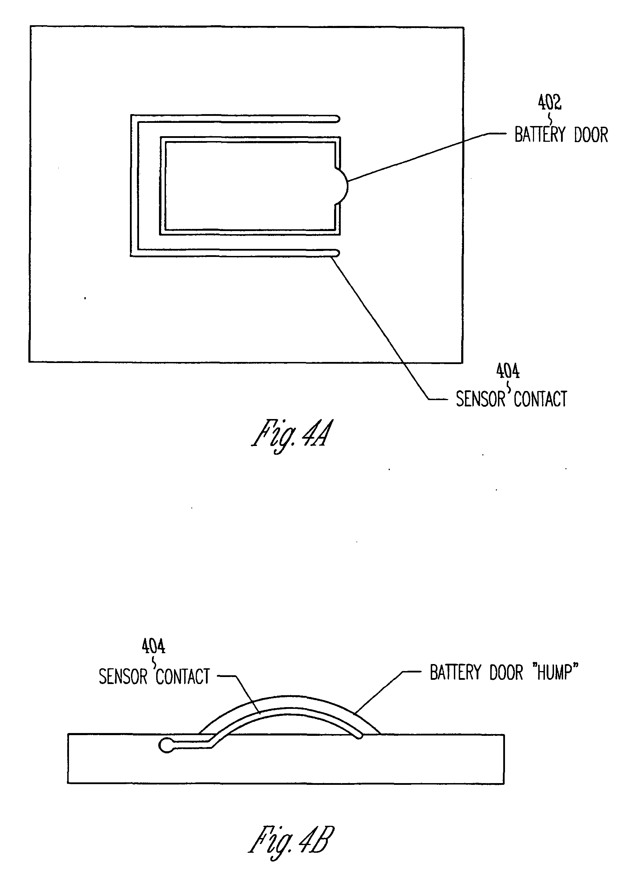

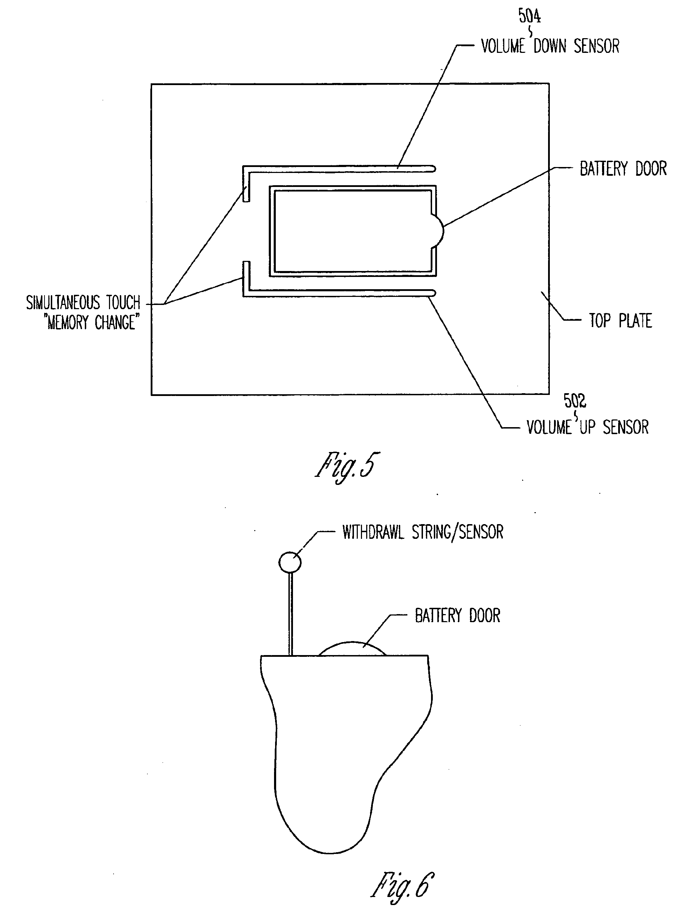

The present subject matter allows for variations in contact designs. FIG. 4A shows a top view of a sensor contact around the battery door, according to one embodiment of the present subject matter. In one embodiment the contact or electrode 404 of the sensor is placed by metallization around the periphery of the battery door 402 so as to avoid having to make an electrically conductive hinge. FIG. 4B shows a side view of a sensor contact around the battery door which conforms to a curvature of the door, according to one embodiment of the present subject matter. FIG. 5 shows an example of two sensors about the battery door, according to one embodiment of the present subject matter. In one embodiment a first sensor electrode and a second sensor electrode provide a plurality of sensing state combinations. The configurations and functions can vary without departing from the scope of the present subject matter. Some examples are provided to demonstrate. For example, the first sensor 502 may support a "volume up" function and the second sensor 504 can support a "volume down" function. In various embodiments, a simultaneous touch to both sensor electrodes can be used to perform another function, such as a mode or memory change 506. Thus, the system is highly programmable and adjustable. In various embodiments, the two sensors configured on the top plate can be combined with a sensor elsewhere in the device to perform a plurality of programmable functions. For example, in one embodiment the two sensors on the top plate can be combined with a sensor that indicates the hearing aid is placed in the ear canal so the controls can perform different functions depending on whether the device is being "worn." For example, the device can support volume control functions when placed in the wearer's ear and can support functions, such as on/off functions when the device is outside of the wearer's ear. Thus, a number of different operations and functions may be supported without departing from the scope of the present subject matter.

FIG. 6 shows one example of a sensor used with a withdrawal element of a completely-in-the-canal device, according to one embodiment of the present subject matter. In various embodiments the withdrawal element is metallic. In various embodiments, the withdrawal element is metalized. The withdrawal element can be flexible such as a plastic or string that is metalized to assist with the sensing function. In various embodiments a conductive polymer can be used to provide the conductivity needed for sensing. Other variations are possible without departing from the scope of the present subject matter.

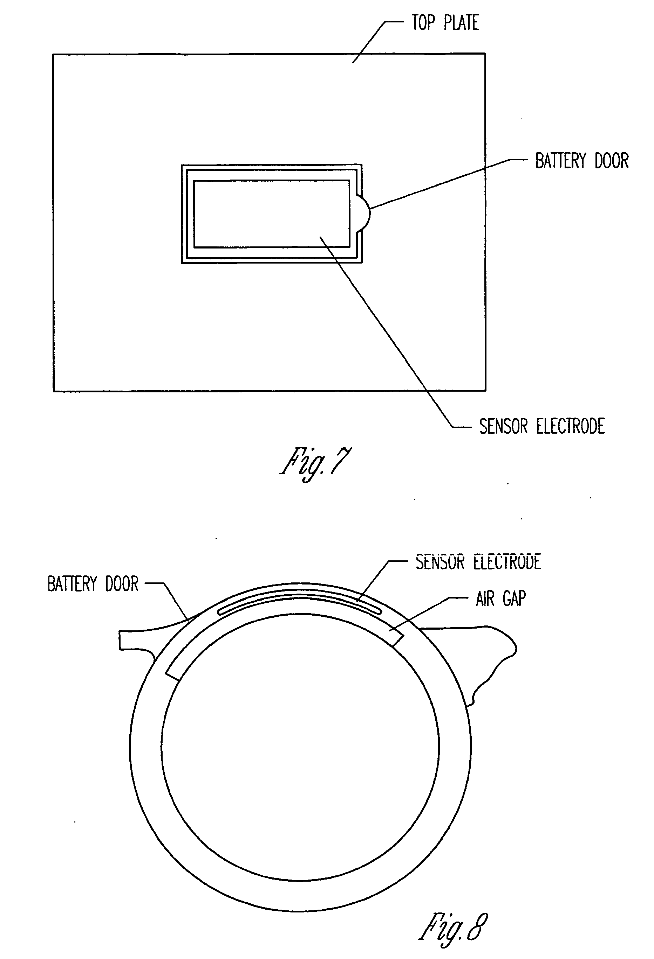

FIG. 7 shows one example of a sensor electrode located in or on the battery door, according to one embodiment of the present subject matter. In various embodiments, the battery door sensor approach employs a conductive hinge assembly to make contact between the battery door electrode and the sensor electronics. Frequently, the battery door presents the most prominent feature to the wearer for easy switch access. By placing a sensor within/on the battery door, the wearer knows they have found the switch. Additional location features, or textures can be incorporated in various embodiments.

One challenge in placing the sensor electrode in or on the ITE battery door is that is resides near a large battery mass. The close battery proximity creates a large shunt capacitance that can degrade sensor switching performance.

One way to enhance performance is to embed the sensor electrode within the door material (for example, plastic). An air gap is deliberately designed to be left between the sensor electrode and the battery to help minimize the potentially large shunt capacitance and resultant compromise to sensor performance. The dielectric coefficient of air is approximately one (1) whereas the dielectric coefficient of the plastic will be larger and typically varies between about 3, 4, 5, or 6. This has the effect of encouraging the electric field away from the battery and reduces the shunt capacitance effect of the battery proximal the sensor electrode. FIG. 8 shows one example of a sensor electrode located in the battery door with an air gap, according to one embodiment of the present subject matter.

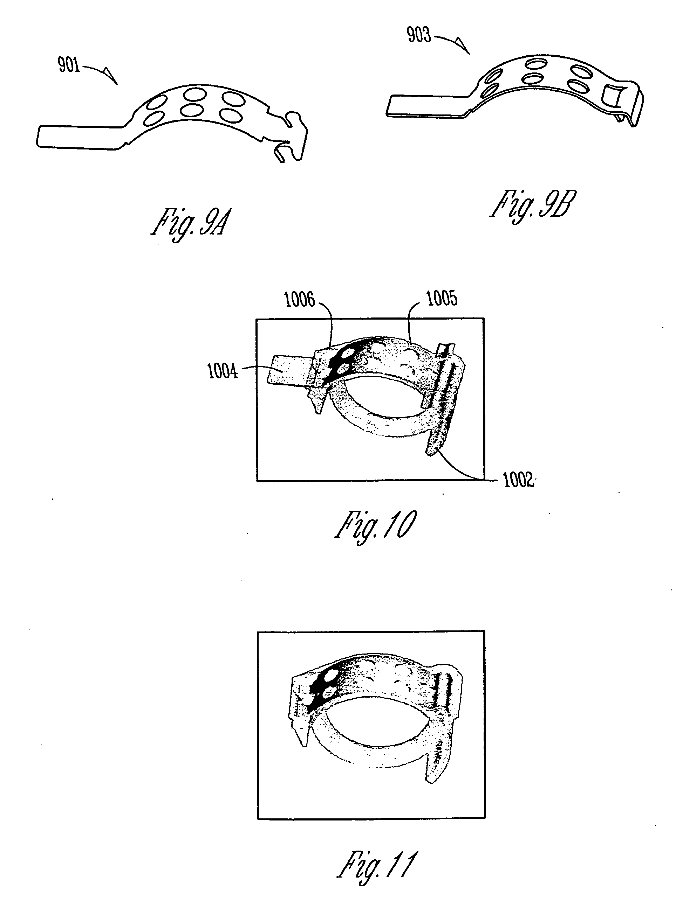

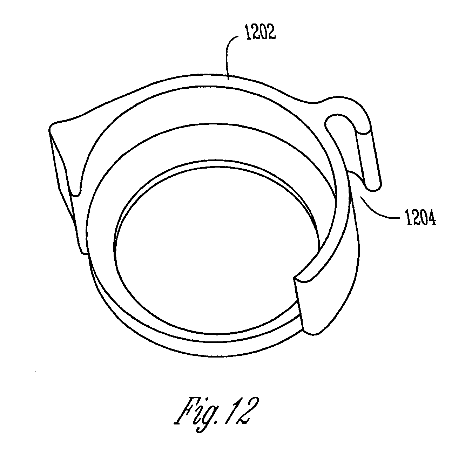

FIGS. 9A and 9B show various examples of battery door electrode designs 901 and 903 according to various embodiments of the present subject matter. FIG. 10 shows the sensor electrode 1005 with tab 1004 connected to the battery door 1002 with shading to show the plastic 1006 encasing the electrode 1005 according to one embodiment of the present subject matter. FIG. 11 shows the embodiment of FIG. 10 with the tab 1004 broken off. FIG. 12 is a different perspective drawing of the battery door 1202 with a conductive hinge 1204, according to one embodiment of the present subject matter. The foregoing examples are provided to demonstrate an example of how a conductive electrode can be provided in a battery compartment using a conductive hinge approach to connect the sensor electrode disposed within the plastic of the battery door. Other configurations and approaches are possible without departing from the scope of the present subject matter.

Capacitive sense technology can benefit CIC hearing aids because they are small and only about 20 percent of such devices can have manual controls such as miniature push buttons. One benefit of the capacitive sense technology is that a light touch can be used to perform a switching or other operation. A push button is not required. This also reduces the possibility of discomfort due to switch pressure from pushing the device into the ear canal. Another benefit is that such switches avoid a loud click as is encountered with some electromechanical switches. The combination of a capacitive switch with rechargeable battery technology provides the option of completely sealed device or one that is sealed but for the microphone opening.

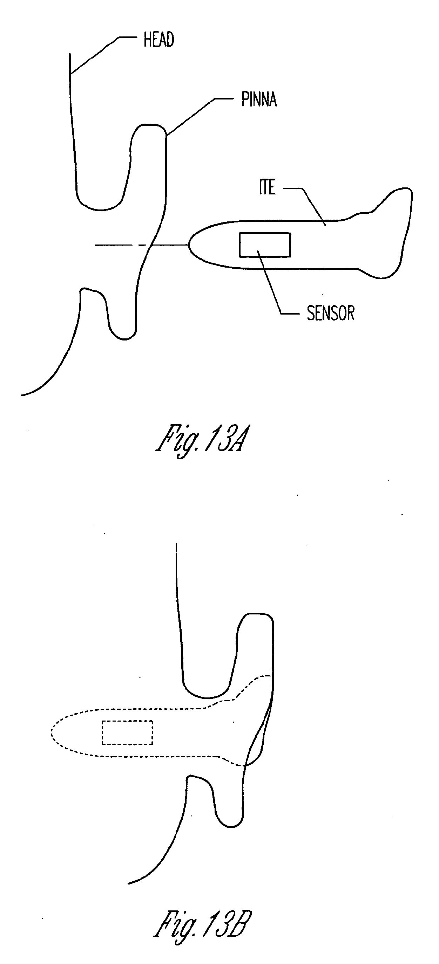

FIGS. 13A and B show one embodiment of an ITE hearing aid with a sensor in the canal region, according to one embodiment of the present subject matter. The placement of the device within the ear canal as shown in FIG. 13B turns the device on. Such a design will detect if an aid is in or out of the ear. If an "in" the ear condition is detected (for example, by a Tragal sensor responding to canal presence), one response is to turn on hearing aid. This feature eliminates the need for users to manipulate small battery doors. This feature eliminates the daily task of opening the battery door to turn off the aid at night.

Better designs will incorporate sensing that does not waste battery power because the device may be in the ear for a long time and numerous sensing of the device can deplete the battery. The switching also needs to be for a suitable time constant that eliminates "handling triggers" as the aid is placed into the wearer's ear canal. The sensor may be interrupt capable to reduce power consumption, allowing the processor to do other important functions between sensing activities. Depending on sensor sensitivity, the sensor can be programmed to determine if the hearing aid is coming loose or in danger of falling off or out of the wearer's ear.

Some commercial capacitive switch devices require above 1.25 volts to operate, so the host processor can be programmed to wake up sufficiently to generate about 1.8 volts to operate the switch.

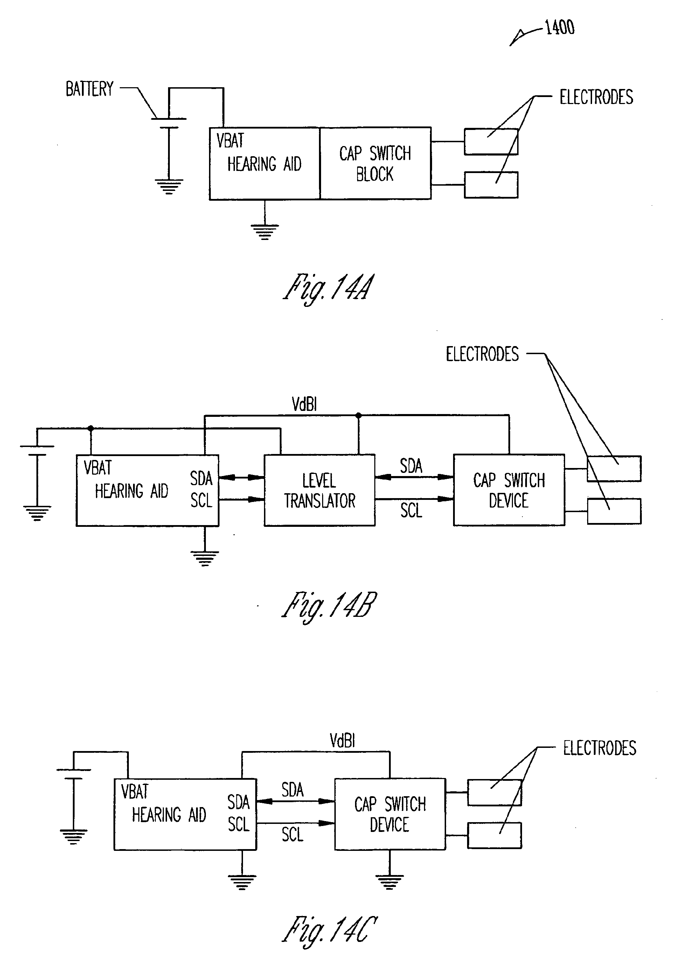

FIG. 14A shows one block diagram of the sensor electronics according to one embodiment of the present subject matter. The hearing aid processor is configured with a capacitive sensing electronics portion to sense the electrodes. This eliminates the need for multiple chips. FIGS. 14B and 14C show variations of the sensor electronics according to various embodiments of the present subject matter. In FIG. 14B the hearing aid electronics are connected to a capacitive sensing device via a level translator block to accommodate different voltage levels. For example, this allows a 1 volt digital signal processor to communicate with the capacitive sensing device operating at 2 volts. In various embodiments, if programming of the capacitive sensing device is not necessary, then in some embodiments the level translator block can be eliminated and a simple voltage divider network could be used for voltage translation between the capacitive sensing device and the hearing aid digital signal processor.

In FIG. 14C the hearing aid electronics are configured to communicate directly to the capacitive sensor device electronics.

Other configurations and components are possible without departing from the scope of the present subject matter.

Moisture and/or wet conditions can affect the operation of capacitive sensing technology. In ITE applications there is a degree of "sheltering" by the Pinna against water/moisture contact with the sensor electrode. An undesirable condition is when moisture contacting the sensor area also contacts the body. This condition reduces detection quality because the circuit may have difficulty distinguishing between a finger activation and moisture because a "good" shunt path is created by both. To minimize the potential for this "wetting" of the face plate, a hydrophobic coating, superhydrophobic coating, oleophobic coating or combinations thereof (for example an omniphobic coating which is superhydrophobic and oleophobic) can be applied to outer surfaces of the faceplate to help minimize wetting and promotes water "beading". Beading reduces the potential for water to establish contact with switch and body. Such coatings can be applied to seams, surrounding areas (such as an adjacent microphone cover), and internal portions of the sensor/switch and/or device in various embodiments. It is understood that hydrophobic coating, superhydrophobic coating, oleophobic coating, and combinations thereof (for example an omniphobic coating which is superhydrophobic and oleophobic) surfaces may be used without relying on a specific coating process. A water film that covers the switch area and also contacts the body will result in unwanted switch triggering. The beading of this moisture could help break up wetted surfaces. Thus such coatings/surfaces can enhance the operation of the hearing aid under a variety of different conditions.

In various embodiments, ground traces are incorporated to help confine electric field lines to specific areas thus helping to define switch zones. Ground traces can limit the influence of adjacent pieces of anatomy.

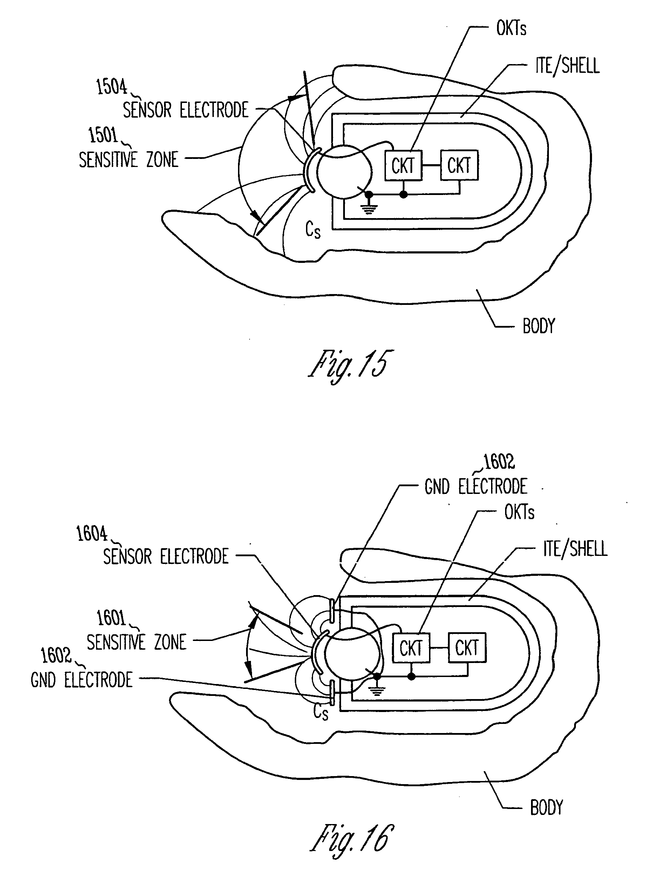

FIGS. 15 and 16 show the effect of different ground traces on the sensitive zone of an in-the-ear hearing aid with capacitive sensing according to various embodiments of the present subject matter. FIG. 16 shows how ground electrodes 1602 about the sensor electrode 1604 which "focus" the sensitive zone 1601 to a smaller region than the sensitive zone 1501 about sensor electrode 1504 in FIG. 15.

In various embodiments, the motions associated with triggering a sense by the sensors is a tap. In various embodiments, the motion is a sweep of the finger. In various embodiments a tap and a sweep are distinguished by the device to perform different functions. In various embodiments, the sweep speed or direction connotes a velocity or change in magnitude of a particular parameter. In various embodiments, multiple taps or tap patterns can be employed to perform different functions or rates of changes of parameters. Thus, several approaches are possible without departing from the scope of the present subject matter.

The sensitivity of the present design can be adjusted to allow more or less pressure to activate the capacitive sensor/switch. In various embodiments the sensitivity of the capacitive sensing is decreased to make the device provide fewer false triggers. This can also be done to facilitate use by wearers having decreased tactile function and/or sensitivity. In various embodiments, hybrid circuits of capacitive and other switches can be employed to move the activation force to a different value and thereby provide a more mechanical feel for the wearer.

In various embodiments, the sensitivity and touch duration are adjustable for various applications. The adjustment can be based on user habits or features. For example, a user with smaller finger size may benefit from a more sensitive switch. Such adjustments can be accomplished in a variety of ways including, but not limited to a fitting session and/or a training mode.

In various embodiments, a sleep/wake-up mode is used to reduce false triggers. In one embodiment, a tap of the sensor/switch will "wake up" the switch and another tap or other motion will activate other switch functionalities. In various embodiments, different motions can be used without departing from the scope of the present subject matter.

Other power saving approaches include, but are not limited to adjusting triggering threshold adaptively. In one embodiment, a communications link can be used to make the adjustment. In one embodiment, an i2c bus is used as a means for adaptively adjusting triggering threshold. Other approaches are possible without departing from the scope of the present subject matter.

In various embodiments the area or region near the sensor/switch is textured to provide the wearer with information as to where the switch is located. In various embodiments, a color coded area denotes where the sensor/switch is located or most sensitive. In various embodiments, a material having different tactile response is used to identify an area at or near the sensor/switch.

In various embodiments readings from the sensor/switch are used to determine if the hearing device is in use. In various embodiments readings from the sensor/switch are used to determine if the hearing device has changed positions. In some embodiments, a long term time constant is used to process sensor/switch readings and to determine whether the device is in position. Other filtering and readings are possible to determine such things without departing from the scope of the present subject matter.

The present subject matter is demonstrated in the application of in-the-ear hearing aids, including in-the-canal (ITC), completely-in-the-canal (CIC) type devices, but aspects may be used in designs including but not limited to, behind-the-ear (BTE), and receiver-in-the-canal (RIC) or receiver-in-the-ear (RITE) type hearing aids. It is understood that behind-the-ear type hearing aids may include devices that reside substantially behind the ear or over the ear. The present subject matter may provide aspects that can be used in hearing assistance devices generally, such as cochlear implant type hearing devices. It is understood that other hearing assistance devices not expressly stated herein may be used in conjunction with the present subject matter.

This application is intended to cover adaptations or variations of the present subject matter. It is to be understood that the above description is intended to be illustrative, and not restrictive. The scope of the present subject matter should be determined with reference to the appended claims.

## Claims

1. An apparatus (100) for a wearer having an ear canal, comprising:
an in-the-ear housing adapted to fit in the wearer's ear canal, the housing having an outer surface,
hearing assistance electronics disposed within the housing;
capacitive sensing electronics connected to the hearing assistance electronics; and
a first capacitive sensor (102) including a first sensing electrode (1604) positioned on or near the outer surface of the housing, the sensing electrode connected to the capacitive sensing electronics, the first capacitive sensor including ground electrodes (1602) about the first sensing electrode (1604) to focus a sensitive zone (1601) of the sensor;
wherein the capacitive sensing electronics is adapted to measure a change in capacitance associated with a motion of a finger or hand proximal to the first sensing electrode (1604) and to provide a signal to the hearing assistance electronics, the hearing assistance electronics configured to perform at least one operation based on the signal.

2. The apparatus according to any of the preceding claims, wherein the hearing assistance electronics are programmable to control a plurality of different operations based on the signal.

3. The apparatus according to any of the preceding claims, wherein the hearing assistance electronics are adapted to receive signals from the first capacitive sensor (102) to perform volume control.

4. The apparatus according to any of the preceding claims, wherein the first capacitive sensor (102) is adapted to function as a memory switch.

5. The apparatus according to any of the preceding claims, comprising a second capacitive sensor (104) adapted to be used in conjunction with the first capacitive sensor (102) to operate the apparatus.

6. The apparatus according to any of the preceding claims, comprising a battery door.

7. The apparatus according to claim 6, wherein the first sensing electrode (1604) is embedded in the battery door.

8. The apparatus according to any of the preceding claims, wherein the capacitive sensing electronics are adapted to measure a change in capacitance associated with one or more taps or tap patterns.

9. The apparatus according to any of the preceding claims, wherein the capacitive sensing electronics are adapted to measure a change in capacitance associated with a sweep of a finger.

10. The apparatus according to claim 9, wherein the capacitive sensing electronics are adapted to measure a change in capacitance associated with speed or direction of the sweep.

11. A method for operating an in-the-ear hearing aid, comprising:
measuring a change in capacitance associated with a motion proximal a first sensing electrode (1604) of a first capacitive sensor (102), the first sensing electrode (1604) positioned on or near an outer surface of a housing of the hearing aid, the first capacitive sensor (102) including ground electrodes (1602) about the first sensing electrode (1604) to focus a sensitive zone of the sensor; and
controlling at least one operation of the hearing aid based on the measured change in the capacitance.

12. The method according to claim 11, comprising using a second capacitive sensor (104) in conjunction with the first capacitive sensor (102) to operate the hearing aid.

13. The method according to any of claims 11 to 12, wherein measuring the change in the capacitance comprises measuring a change in the capacitance associated with one or more taps or tap patterns.

14. The method according to any of claims 11 to 13, wherein measuring the change in the capacitance comprises measuring a change in the capacitance associated with a sweep of a finger.

15. The method according to claim 14, wherein measuring the change in the capacitance comprises measuring a change in the capacitance associated with speed or direction of the sweep.

## Patentansprüche

1. Vorrichtung (100) für einen Träger, der einen Gehörgang hat, umfassend:
ein Im-Ohr-Gehäuse, das dafür eingerichtet ist, in den Gehörgang des Trägers zu passen, wobei das Gehäuse eine äußere Oberfläche hat;
Hörunterstützungselektronik, die innerhalb des Gehäuses angeordnet ist;
kapazitive Abtastelektronik, die mit der Hörunterstützungselektronik gekoppelt ist; und
einen ersten kapazitiven Sensor (102), der eine erste Abtastelektrode (1604) einschließt, die auf oder nahe der äußeren Oberfläche des Gehäuses positioniert ist, wobei die Abtastelektrode mit der kapazitiven Abtastelektronik verbunden ist, wobei der erste kapazitive Sensor Masseelektroden (1602) rings um die erste Abtastelektrode (1604) einschließt, um eine empfindliche Zone (1601) des Sensors zu fokussieren;
worin die kapazitive Abtastelektronik dafür eingerichtet ist, eine Änderung der Kapazität zu messen, die einer Bewegung eines Fingers oder einer Hand, die bzw. der proximal zur ersten Abtastelektrode (1604) ist, zugeordnet ist, und ein Signal an die Hörunterstützungselektronik zu übergeben, wobei die Hörunterstützungselektronik dafür konfiguriert ist, auf der Grundlage des Signals mindestens eine Operation durchzuführen.

2. Vorrichtung nach einem der vorhergehenden Ansprüche, worin die Hörunterstützungselektronik programmierbar ist, um auf der Grundlage des Signals eine Vielzahl von unterschiedlichen Operationen zu steuern.

3. Vorrichtung nach einem der vorhergehenden Ansprüche, worin die Hörunterstützungselektronik dafür eingerichtet ist, Signale vom ersten kapazitiven Sensor (102) zu empfangen, um Lautstärkesteuerung durchzuführen.

4. Vorrichtung nach einem der vorhergehenden Ansprüche, worin der erste kapazitive Sensor (102) dafür eingerichtet ist, als Speicherschalter zu fungieren.

5. Vorrichtung nach einem der vorhergehenden Ansprüche, einen zweiten kapazitiven Sensor (104) umfassend, der dafür eingerichtet ist, in Zusammenhang mit dem ersten kapazitiven Sensor (102) verwendet zu werden, um die Vorrichtung zu bedienen.

6. Vorrichtung nach einem der vorhergehenden Ansprüche, eine Batterietür umfassend.

7. Vorrichtung nach Anspruch 6, worin die erste Abtastelektrode (1604) in die Batterietür eingebettet ist.

8. Vorrichtung nach einem der vorhergehenden Ansprüche, worin die kapazitive Abtastelektronik dafür eingerichtet ist, eine Änderung der Kapazität zu messen, die mit einer oder mehreren Fingerberührungen oder Fingerberührungsmustern assoziiert ist.

9. Vorrichtung nach einem der vorhergehenden Ansprüche, worin die kapazitive Abtastelektronik dafür eingerichtet ist, eine Änderung der Kapazität zu messen, die einer überstreichenden Bewegung eines Fingers zugeordnet ist.

10. Vorrichtung nach Anspruch 9, worin die kapazitive Abtastelektronik dafür eingerichtet ist, eine Änderung der Kapazität zu messen, die der Geschwindigkeit oder Richtung der überstreichenden Bewegung zugeordnet ist.

11. Verfahren zum Bedienen einer Im-Ohr-Hörhilfe, umfassend:
Messen einer Änderung der Kapazität, die einer Bewegung proximal zu einer ersten Abtastelektrode (1604) eines ersten kapazitiven Sensors (102) zugeordnet ist, wobei die erste Abtastelektrode (1604) auf oder nahe einer äußeren Oberfläche eines Gehäuses der Hörhilfe positioniert ist, wobei der erste kapazitive Sensor (102) Masseelektroden (1602) rings um die erste Abtastelektrode (1604) einschließt, um eine empfindliche Zone (1601) des Sensors zu fokussieren; und
Steuern mindestens einer Operation der Hörhilfe auf der Grundlage der gemessenen Änderung der Kapazität.

12. Verfahren nach Anspruch 11, umfassend: Verwenden eines zweiten kapazitiven Sensors (104) in Zusammenhang mit dem ersten kapazitiven Sensor (102), um die Hörhilfe zu bedienen.

13. Verfahren nach einem der Ansprüche 11 bis 12, worin das Messen der Änderung der Kapazität umfasst: Messen einer Änderung der Kapazität, die mit einer oder mehreren Fingerberührungen oder Fingerberührungsmustern assoziiert ist.

14. Verfahren nach einem der Ansprüche 11 bis 13, worin das Messen der Änderung der Kapazität umfasst: Messen einer Änderung der Kapazität, die einer überstreichenden Bewegung eines Fingers zugeordnet ist.

15. Verfahren nach Anspruch 14, worin das Messen der Änderung der Kapazität umfasst: Messen einer Änderung der Kapazität, die der Geschwindigkeit oder Richtung der überstreichenden Bewegung zugeordnet ist.

## Revendications

1. Appareil (100) pour un porteur possédant un canal auditif, comprenant :
un boîtier intra-auriculaire approprié pour s'adapter au canal auditif dudit porteur, le boîtier présentant une surface extérieure ;
une électronique d'aide auditive agencée au sein du boîtier ;
une électronique de détection capacitive connectée à l'électronique d'aide auditive ; et
un premier capteur capacitif (102) comprenant une première électrode de détection (1604) positionnée sur ou près de la surface extérieure du boîtier, l'électrode de détection étant connectée à l'électronique de détection capacitive, le premier capteur capacitif comprenant des électrodes de masse (1602) autour de la première électrode de détection (1604) pour concentrer une zone sensible (1601) du capteur ;
dans lequel l'électronique de détection capacitive est appropriée pour mesurer une modification de capacité associée à un mouvement d'un doigt ou d'une main proximal(e) par rapport à la première électrode de détection (1604) et pour fournir un signal à l'électronique d'aide auditive, l'électronique d'aide auditive étant configurée pour mettre en oeuvre au moins une opération en se basant sur le signal.

2. Appareil selon l'une quelconque des revendications précédentes, dans lequel l'électronique d'aide auditive est programmable afin de commander une pluralité d'opérations différentes en se basant sur le signal.

3. Appareil selon l'une quelconque des revendications précédentes, dans lequel l'électronique d'aide auditive est appropriée pour recevoir des signaux provenant du premier capteur capacitif (102) afin de mettre en oeuvre une commande du volume.

4. Appareil selon l'une quelconque des revendications précédentes, dans lequel le premier capteur capacitif (102) est approprié pour fonctionner en tant que commutateur de mémoire.

5. Appareil selon l'une quelconque des revendications précédentes, comprenant un second capteur capacitif (104) approprié pour être utilisé conjointement au premier capteur capacitif (102) afin de faire fonctionner l'appareil.

6. Appareil selon l'une quelconque des revendications précédentes, comprenant une porte de batterie.

7. Appareil selon la revendication 6, dans lequel la première électrode de détection (1604) est intégrée dans la porte de batterie.

8. Appareil selon l'une quelconque des revendications précédentes, dans lequel l'électronique de détection capacitive est appropriée pour mesurer une modification de capacité associée à un ou plusieurs tapotement(s) ou modèles de tapotement.

9. Appareil selon l'une quelconque des revendications précédentes, dans lequel l'électronique de détection capacitive est appropriée pour mesurer une modification de capacité associée à un balayage par un doigt.

10. Appareil selon la revendication 9, dans lequel l'électronique de détection capacitive est appropriée pour mesurer une modification de capacité associée à une vitesse ou une direction dudit balayage.

11. Procédé pour faire fonctionner une aide auditive intra-auriculaire, comprenant les étapes consistant à :
mesurer une modification de capacité associée à un mouvement proximal par rapport à une première électrode de détection (1604) d'un premier capteur capacitif (102), la première électrode de détection (1604) étant positionnée sur ou près d'une surface extérieure d'un boîtier de l'aide auditive, le premier capteur capacitif (102) comprenant des électrodes de masse (1602) autour de la première électrode de détection (1604) pour concentrer une zone sensible du capteur ; et
commander au moins une opération de l'aide auditive en se basant sur la modification mesurée de la capacité.

12. Procédé selon la revendication 11, comprenant l'étape consistant à utiliser un second capteur capacitif (104) conjointement au premier capteur capacitif (102) pour faire fonctionner l'aide auditive.

13. Procédé selon l'une quelconque des revendications 11 à 12, dans lequel l'étape consistant à mesurer la modification de la capacité comprend une étape consistant à mesurer une modification de la capacité associée à un ou plusieurs tapotement(s) ou modèles de tapotement.

14. Procédé selon l'une quelconque des revendications 11 à 13, dans lequel l'étape consistant à mesurer la modification de la capacité comprend une étape consistant à mesurer une modification de la capacité associée à un balayage par un doigt.

15. Procédé selon la revendication 14, dans lequel l'étape consistant à mesurer la modification de la capacité comprend une étape consistant à mesurer la modification de la capacité associée à une vitesse ou une direction dudit balayage.
